(19) Europäisches Patentamt / European Patent Office / Office européen des brevets

(11) **EP 4 560 790 A1**

(12) **EUROPEAN PATENT APPLICATION**
published in accordance with Art. 153(4) EPC

(43) Date of publication:
**28.05.2025 Bulletin 2025/22**

(21) Application number: **23869825.2**

(22) Date of filing: **29.06.2023**

(51) International Patent Classification (IPC):
*H01M 10/615* (2014.01)    *H01M 10/657* (2014.01)

(52) Cooperative Patent Classification (CPC):
**B60L 50/64; H01M 10/615; H01M 10/625; H01M 10/657; H01M 50/119**

(86) International application number:
**PCT/CN2023/103968**

(87) International publication number:
**WO 2024/066577 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 CN 202211189986**

(71) Applicant: **BYD Company Limited**
**Shenzhen, Guangdong 518118 (CN)**

(72) Inventors:
- **CHENG, Han**
  **Shenzhen, Guangdong 518118 (CN)**
- **WANG, Xinyue**
  **Shenzhen, Guangdong 518118 (CN)**
- **XIONG, Ming**
  **Shenzhen, Guangdong 518118 (CN)**
- **YUAN, Wansong**
  **Shenzhen, Guangdong 518118 (CN)**

(74) Representative: **Taor, Simon Edward William et al**
**Venner Shipley LLP**
**200 Aldersgate**
**London EC1A 4HD (GB)**

(54) **BATTERY THERMAL MANAGEMENT SYSTEM, BATTERY PACK AND VEHICLE**

(57)    A battery thermal management system, a battery pack, and a vehicle. The battery thermal management system comprises a battery and a pulse charging and discharging apparatus, wherein the battery comprises a pole and an electrically conductive housing (1), which is arranged at the periphery of the pole; the pulse charging and discharging apparatus is electrically connected to the battery, and is used for performing pulse charging and discharging on the battery to generate a varying magnetic field; and the electrically conductive housing (1) is located within the varying magnetic field, and is used for generating an induced current and heating the pole.

FIG. 1

EP 4 560 790 A1

**Description**

CROSS-REFERENCE TO RELATED APPLICATIONS

The present disclosure claims priority to Chinese Patent Application No. 202211189986.2, filed on September 28, 2022. The entire content of the above-referenced application is incorporated herein by reference.

FIELD

The present disclosure relates to the field of battery heating technologies, and specifically, to a battery thermal management system, a battery pack, and a vehicle.

BACKGROUND

Currently, due to resource shortages, batteries serving as new energy carriers has become a trend, and the batteries are more widely used in electric vehicles and the like. Existing battery packs use aerogel as a buffer material for blocking heat conduction between batteries, to reduce a heat transfer rate of a single battery after thermal runaway, and extend thermal diffusion time of a module or a battery pack body. In addition, to overcome problems of a low discharging power and a limited charging power of a lithium-ion battery at a low temperature, the battery needs to be heated when the battery is started or charged at a low temperature, to raise the temperature of the battery to a reasonable range as soon as possible. In the related art, a solution of arranging a heating sheet on a frame of the battery pack or arranging a heating sheet inside the battery is widely used. However, a heating sheet arranged on a module frame generally heats only a bottom part or a side surface of the battery, and cannot heat a large surface with highest heat transfer efficiency, which occupies additional space, and reduces space utilization. The heating sheet inside the battery has a problem of pollution in the battery after a plastic film of the metal heating sheet breaks, which easily leads to safety accidents. The heating sheet inside the battery also has a defect of occupying internal space of the battery.

SUMMARY

The present disclosure is intended to resolve one of technical problems in the related art at least to some extent.
To this end, an objective of the present disclosure is to provide a battery thermal management system, to resolve problems that in an existing battery thermal management system, a heating apparatus occupies internal space of a battery and has low heat conduction efficiency.
Another objective of the present disclosure is to provide a battery pack.
Another objective of the present disclosure is to provide a vehicle.
The present disclosure provides a battery thermal management system, including a battery and a pulse charging and discharging apparatus. The battery includes an electrode core and a conductive housing. The conductive housing is arranged on an outer periphery of the electrode core. The pulse charging and discharging apparatus is electrically connected to the battery. The pulse charging and discharging apparatus is configured to perform pulse charging and discharging on the battery to generate a changing magnetic field. The conductive housing is located in the changing magnetic field, and the conductive housing is configured to generate an induced current and heat the electrode core.
According to the battery thermal management system provided in the present disclosure, the changing magnetic field is generated when the battery is pulse charged/discharged. The changing magnetic field causes the conductive housing located in the magnetic field to generate an induced electromotive force and an induced current. The induced current generated by the conductive housing forms an eddy current effect, generates thermal energy, and starts to heat the electrode core of the battery. The conductive housing is used as a heating component, so that the internal space of the battery pack and the battery is not occupied additionally. In addition, the conductive housing is arranged on the outer periphery of the electrode core, and a heat transfer area is large, so that the heat conduction efficiency is improved. When heating is started, the conductive housing can effectively heat a position at which a temperature of the electrode core is lowest. In addition, a heating power of the battery can be freely adjusted by controlling a pulse charging/discharging frequency and a pulse charging/discharging current magnitude of the pulse charging and discharging apparatus. When the conductive housing heats the electrode core of the battery, the battery has a small impact on another external system (another battery, a pack body, a module structural member, and electrical and thermal management systems).
The additional aspects and advantages of the present disclosure will be set forth in part in the following description, and some of the additional aspects and advantages will become apparent from the following description, or will be learned from practice of the present disclosure.

## BRIEF DESCRIPTION OF THE DRAWINGS

FIG. 1 is a diagram of a battery pulse discharging state of a battery thermal management system according to an embodiment of the present disclosure; and

FIG. 2 is a process diagram of energy conversion in a heating process of a battery thermal management system according to an embodiment of the present disclosure.

## DETAILED DESCRIPTION

To make the technical problems to be resolved by the present disclosure, technical solutions, and beneficial effects more comprehensible, the following further describes the present disclosure in detail with reference to embodiments and the accompanying drawings. It should be understood that the specific embodiments described herein are merely used to explain the present disclosure but are not intended to limit the present disclosure.

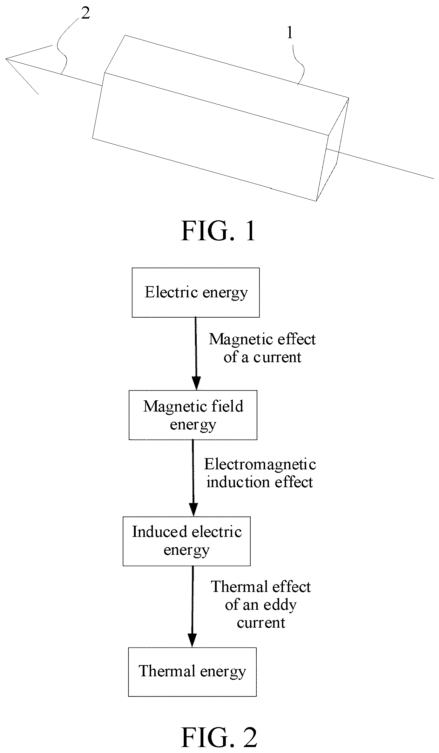

As shown in FIG. 1 and FIG. 2, an embodiment of the present disclosure provides a battery thermal management system, including a battery and a pulse charging and discharging apparatus. The battery includes an electrode core and a conductive housing 1. The conductive housing 1 is arranged on an outer periphery of the electrode core and is configured to accommodate the electrode core. The pulse charging and discharging apparatus is electrically connected to the battery. The pulse charging and discharging apparatus is configured to perform pulse charging and discharging on the battery to generate a changing magnetic field. The conductive housing is located in the changing magnetic field, and the conductive housing is configured to generate an induced current and heat the electrode core. The pulse charging and discharging apparatus is configured to generate a changing current to charge the battery, or control the battery to discharge based on the changing current. Specifically, the changing current may be an alternating current or a changing direct current. When pulse charging and discharging is performed on the battery, a current flowing through the electrode core is the changing current, and the electrode core generates the changing magnetic field, so that the conductive housing 1 located in the changing magnetic field can generate the induced current, to generate heat to heat the electrode core. Specifically, the conductive housing 1 needs to implement, based on satisfying requirements such as a strength and sealing performance required by the battery, a function of generating eddy current heating by electromagnetic induction in a changing magnetic field when pulse discharging is performed on the battery.

In this embodiment, the changing magnetic field is generated when pulse charging and discharging is performed on the battery. The changing magnetic field causes the conductive housing 1 located in the magnetic field to generate an induction electromotive force and the induced current. The induced current generated by the conductive housing 1 forms an eddy current effect, generates thermal energy, and starts to heat the electrode core of the battery. The conductive housing 1 is used as a heating component, so that internal space of the battery pack and the battery is not occupied additionally. In addition, the conductive housing 1 is arranged on the outer periphery of the electrode core, and a heat transfer area is large, so that heat conduction efficiency is improved. When heating is started, the conductive housing 1 can effectively heat a position at which a temperature of the electrode core is the lowest. In addition, a heating power of the battery can be freely adjusted by controlling a pulse charging/discharging frequency and a pulse charging/discharging current magnitude of the pulse charging and discharging apparatus. When the conductive housing 1 heats the electrode core of the battery, the battery has a small impact on another external system (another battery, a pack body, a module structural member, and electrical and thermal management systems). First, due to an eddy current phenomenon generated by the conductive housing, a heating effect on a side that is close to the electrode core is better than a heating effect on a side that is away from the electrode core. Therefore, the battery thermal management system disclosed in the present disclosure can further reduce the impact of heating the battery on the other batteries and make the heating more concentrated. In addition, for a single battery core, when the alternating current is applied to the battery, eddy current heating can be performed, and assisted heating of the single battery core can be further performed due to application of the alternating current. In this way, the heating effect is more obvious.

Specifically, in a charging/discharging process of the battery, a current path inside the electrode core may be simplified to a current direction 2 that is perpendicular to a cross section of the battery housing. When a current I represented by the current direction 2 changes, a changing magnetic field is generated.

Specifically, basic equations for an electromagnetic induction problem are Maxwell's equations. The Maxwell's equations include Gauss's law for an electric field, circulation law for the electric field, Gauss's law for a magnetic field, and Ampere circuital law. A mathematical expression is as follows:

$$\begin{cases} \int_S \vec{D}\cdot\mathrm{d}\vec{S} = \int_V \rho\mathrm{d}V = q \\[2mm] \int_S \vec{E}\cdot\mathrm{d}\vec{l} = -\int_S \frac{\partial \vec{B}}{\partial t}\cdot\mathrm{d}\vec{S} \\[2mm] \int_S \vec{B}\cdot\mathrm{d}\vec{S} = 0 \\[2mm] \int_S \vec{H}\cdot\mathrm{d}\vec{l} = \int_S (\vec{j}+\frac{\partial \vec{D}}{\partial t})\cdot\mathrm{d}\vec{S} \end{cases} \qquad (2\text{-}1)$$

In the formula,

$\vec{D}$ is an electrical displacement, and a unit of $\vec{D}$ is C/m;
$\rho$ is a charge density, and a unit of $\rho$ is $C/m^3$;
q is a charge, and a unit of q is C;
$\vec{E}$ is an electric field strength, and a unit of $\vec{E}$ is V/m;
$\vec{B}$ is a magnetic induction strength, and a unit of $\vec{B}$ is A/m;
$\vec{H}$ is a magnetic field strength, and a unit of $\vec{H}$ is A/m; and
$\vec{j}$ is a current density, and a unit of $\vec{j}$ is $A/m^2$.

The electromagnetic induction heating in this embodiment is a quasi-stationary electromagnetic field, whose frequency is much lower than a frequency of a radio high frequency electromagnetic field and a frequency of an optical high frequency electromagnetic field, so that in the equations, $\partial/\partial t$ is much less than the current density, and a displacement current density is ignored. Therefore, the Maxwell's equations are transformed into a differential form, and a simplified formula is as follows:

$$\begin{cases} \nabla\cdot\vec{D} = 0 \\[2mm] \nabla\times\vec{E} = -\frac{\partial \vec{B}}{\partial t} \\[2mm] \nabla\cdot\vec{B} = 0 \\[2mm] \nabla\times\vec{H} = \vec{j} \end{cases} \qquad (2\text{-}2)$$

In the formula,

$\nabla\cdot$ is a divergence of a corresponding vector; and
$\nabla\times$ is a curl of the corresponding vector.

According to Biot-Savart Law, a corresponding electric field generates a magnetic field:

$$\mathrm{d}\vec{B} = \frac{\mu_0}{4\pi}\cdot\frac{\vec{I}\mathrm{d}\vec{l}\times\vec{e}_r}{r^2} \qquad (2\text{-}3)$$

In the formula,

$\vec{I}$ is current vector, and a unit of $\vec{I}$ is A; and
$\mu_0$ is a permeability of vacuum ($4\pi \times 10^{\wedge}(-7)$N/A$^2$).

A relationship between a total current density $\vec{j}$, a source current density $\vec{j}_s$, namely, a pulse current density applied by the pulse charging and discharging apparatus to the battery, an eddy current density $\vec{j}_e$, and the magnetic induction strength $\vec{B}$ is as follows:

$$\begin{cases} \vec{j} = \nabla \times \vec{H} = \nabla \times \dfrac{\vec{B}}{\mu} \\[2mm] \vec{j}_e = \vec{j} - \vec{j}_s \\[2mm] \vec{j}_s = \sigma \vec{E} = -\sigma \int_s \dfrac{\partial \vec{B}}{\partial t} \cdot d\vec{S} / dl \end{cases} \qquad (2\text{-}4)$$

For convenience of representing an induced eddy current density $\vec{j}_e$, a magnetic field vector $\vec{A}$ is introduced as an auxiliary quantity for calculating the magnetic induction strength $\vec{B}$. It can be learned from an integral form of Biot-Savart Law (2-3) that a relationship between $\vec{A}$ and $\vec{I}$ is as follows:

$$\begin{cases} \vec{B} = \nabla \times \vec{A} \\[2mm] \vec{A} = \dfrac{\mu_0}{4\pi} \int_L \dfrac{\vec{I} dl}{r} \end{cases} \qquad (2\text{-}5)$$

Formulas (2-4) and (2-5) are combined, and a relationship between the eddy current density $\vec{j}_e$ and the magnetic field vector $\vec{A}$ can be obtained:

$$\vec{j}_e = \nabla \times \vec{H} - \sigma \cdot \vec{E} = \nabla \times \dfrac{\nabla \times \vec{A}}{\mu} + \sigma \cdot \dfrac{\partial \vec{A}}{\partial t} \qquad (2\text{-}6)$$

A current density in an eddy current heating area is in a one-to-one correspondence with a heating power at each point in an induction heating process:

$$p = \dfrac{\left|\vec{j}_e\right|^2}{\sigma} \qquad (2\text{-}7)$$

It can be learned from the foregoing formula (2-5) and formula (2-6) that the magnetic field vector $\vec{A}$ reflects an

influence of an induced source current I on the induced eddy current density $\vec{j}_e$. The greater the amplitude of a source current change, the higher the induced current in the conductive housing 1. The higher the frequency f of the source current change, the higher the induced current in the housing. Correspondingly, the higher the induced current in the housing, the higher the eddy current heating power.

For the housing that generates the induced current,

$$\vec{B} = \mu \vec{H} \qquad (2\text{-}8)$$

$$\vec{D} = \varepsilon \vec{E} \qquad (2\text{-}9)$$

In the formula, $\mu$ is a magnetic permeability of a material of the conductive housing 1, and a unit of $\mu$ is H/m; and $\varepsilon$ is a dielectric constant, and a unit of $\varepsilon$ is F/m.

In addition, it can be learned from (2-4) and (2-8) that the higher the magnetic permeability $\mu$ of the material of the conductive housing 1, the greater the $\vec{B}$, the higher the induced eddy current density $\vec{j}_e$, and the higher the eddy current heating power. It can be learned from (2-7) that the lower the resistivity $\sigma$ of the material of the conductive housing 1, the higher the eddy current heating power p.

In some embodiments, the pulse discharging frequency applied by the pulse charging and discharging apparatus to the battery is greater than 10 Hz.

In some embodiments, the pulse discharging frequency applied by the pulse charging and discharging apparatus to the battery ranges from 10 Hz to 10000 Hz. When the pulse discharging frequency is less than 10 Hz, a heat generation power of the conductive housing 1 is excessively low, and heating efficiency is low. When the pulse discharging frequency is higher than 10000 Hz, costs are excessively high.

In some embodiments, a pulse current I applied by the pulse charging and discharging apparatus to the battery is equal to kA. A is a battery capacity, and a unit of A is Ah; and k is a coefficient, and $0.3 \leq k \leq 20$. Specifically, the range of the pulse current is applicable to a lithium-ion battery at -10°C. As a temperature of the battery before heating further decreases, a maximum value of k needs to be reduced based on an actual condition. When the value of k is less than 0.3, the pulse current I is relatively low, the heat generation power of the conductive housing 1 is excessively low, and a heating rate is excessively slow. When the value of k is greater than 20, the lithium-ion battery is difficult to discharge at a low temperature due to high internal resistance and large polarization.

In some embodiments, when a temperature of the conductive housing 1 ranges from -45°C to 100°C, a ratio of a relative magnetic permeability $\mu_r$ of the conductive housing 1 to the resistivity $\sigma$ of the conductive housing 1 is $500 \leq \mu_r/\sigma \leq 5 \times 10^6$. A unit of $\sigma$ is $10^{-6}\Omega\cdot m$. Specifically, the ratio of the relative magnetic permeability $\mu_r$ of the conductive housing 1 to the resistivity $\sigma$ of the conductive housing 1 may be any of 500, 1000, 5000, 8000, 30000, 170000, $1 \times 10^6$, $3 \times 10^6$, $5 \times 10^6$, and the like, as long as the ratio of the relative magnetic permeability $\mu_r$ of the conductive housing 1 to the resistivity $\sigma$ of the conductive housing 1 ranges from 500 to $5 \times 10^6$. A material with a relatively large ratio of the magnetic permeability to the resistivity is selected to make the conductive housing 1, so that the induced current generated by the conductive housing 1 is relatively high, thereby increasing the heating power. When the ratio of the relative magnetic permeability $\mu_r$ to the resistivity $\sigma$ of the material of the conductive housing 1 is less than 500, in the changing magnetic field generated by pulse charging and discharging performed on the battery, the induced current generated by the conductive housing 1 is excessively low or is basically ignored. Therefore, the eddy current heating power is excessively low or may be ignored or the eddy current heating power and heat dissipation of the battery are canceled out with each other.

The higher the magnetic permeability $\mu$ of the material of the conductive housing, the greater the $\vec{B}$, the higher the induced eddy current density $\vec{j}_e$, and the higher the eddy current heating power. The lower the resistivity $\sigma$ of the material of the conductive housing, the higher the eddy current heating power p. Therefore, the resistivity $\sigma$ of the material of the conductive housing needs to be as low as possible, and the magnetic permeability $\mu$ needs to be as high as possible, so that the induced current generated by the conductive housing 1 is relatively high, thereby increasing the heating power.

In some embodiments, the material of the conductive housing 1 is selected from an iron-based soft magnetic alloy. The iron-based soft magnetic alloy includes one or more of silicon steel, soft magnetic stainless steel, permalloy, low-carbon mild steel, amorphous soft magnetic alloy, and nanocrystalline soft magnetic alloy. At 25°C, a ratio of $\mu_r/\rho$ of common silicon steel ranges from 8000 to 30000; a ratio of $\mu_r/\rho$ of the permalloy ranges from 35000 to 170000; and a ratio of $\mu_r/\rho$ of some types of iron-based nanocrystalline alloys ranges from $0.8 \times 10^6$ to $2 \times 10^6$.

Specifically, in the silicon steel, a content of Si ranges from 0.2% to 5%, and the rest is Fe and a silicon-iron alloy that includes a small amount of other elements (single element mass fraction that is less than or equal to 1%) used to improve material performance.

In the soft magnetic stainless steel, a content of Cr ranges from 10% to 19%, the content of Si ranges from 0.5% to 3%, and the rest is Fe and a small amount of other elements used to improve the material performance.

In the permalloy, a content of Ni ranges from 30% to 90%, and the rest is Fe and a small amount of other elements used to improve performance.

The amorphous soft magnetic alloy is selected from one or more of an iron-based amorphous alloy and an iron-nickel-based amorphous alloy. Specifically, in the iron-based amorphous alloy, Fe accounts for 80% by mass, and Si and B elements account for 20% by mass. In the iron-nickel-based amorphous alloy, Ni accounts for 40% by mass, Fe accounts for 40% by mass, and other metal elements used to improve performance account for 20% by mass.

The nanocrystalline soft magnetic alloy is selected from the iron-based nanocrystalline alloy. Specifically, the iron-based nanocrystalline alloy mainly includes Fe, with a small amount of Nb, Cu, Si, and B elements added. Heat processing is performed on an amorphous material formed by a rapid solidification process.

In some embodiments, a thickness of the conductive housing 1 is T, where $0 < T \le \delta$,

$$\delta = \mathrm{K}_0 \sqrt{\sigma / (\mathrm{f} \bullet \mu_\mathrm{r})}\,,$$

$\delta$ is a skin effect penetration depth, and a unit of $\delta$ is mm;

$\mathrm{K}_0$ is a skin effect penetration depth coefficient;

a unit of $\sigma$ is $\Omega \bullet \mathrm{m}$; and

f is the pulse discharging frequency, and a unit of f is Hz.

In the present disclosure, the thickness of the conductive housing is controlled, so that a waste of the material of the conductive housing is reduced, the heating efficiency is improved, and an impact of a cell on another external system (another battery, a pack body, a module structural member, and electrical and thermal management systems) during heating is reduced.

Specifically, $\mathrm{K}_0$ is related to a shape of the housing. Generally, $\mathrm{K}_0$ of a cylinder is 50300, and other special shapes have different effects. In this embodiment, a cylindrical battery is used as an example for description.

In some embodiments, the conductive housing 1 includes a cover plate and a housing. The electrode core is accommodated in the housing. The cover plate is configured to seal the housing. A thickness of the housing is T. In this embodiment, the thickness of the housing is limited to ensure heating of the battery core, while reducing costs of the battery core, and improving an overall energy density and battery space utilization.

In some embodiments, the battery includes a positive terminal and a negative terminal. The positive terminal and the negative terminal are separately arranged at two ends of the conductive housing 1 and are electrically connected to the electrode core. It should be noted herein that, the positive terminal and the negative terminal may alternatively be arranged side by side at one end of the conductive housing 1.

According to another aspect, an embodiment of the present disclosure further provides a battery pack, including the battery thermal management system according to any one of the foregoing embodiments. For the battery pack, because the battery cores are connected in series, connected in parallel, or the like, the battery pack only needs to apply a changing current to a total positive pole and a total negative pole to implement self-heating of all the battery cores, and performs heating relative to external components. In this embodiment, heating is more uniform for the battery pack, and each battery core can perform self-heating by using the housing. In addition, a difference in the heating power between batteries at different assembly positions in a battery pack body is small, the thermal management system of the entire battery pack body is concise and direct, and the space utilization is high.

According to another aspect, an embodiment of the present disclosure further provides a vehicle, including the battery thermal management system according to any one of the foregoing embodiments.

The present disclosure will be further described below by using embodiments.

Embodiment 1

This embodiment is used to describe heating efficiency of the battery thermal management system disclosed in the present disclosure. The battery thermal management system includes a battery and a pulse charging and discharging apparatus. A capacity of the battery is 100 Ah. A pulse charging and discharging frequency applied by the pulse charging and discharging apparatus to the battery is 500 Hz. A pulse current is 500 A. A material of a conductive housing 1 is silicon steel. A ratio of a relative magnetic permeability $\mu_\mathrm{r}$ to a resistivity $\sigma$ is about 10000.

Embodiment 2

This embodiment is used to describe heating efficiency of the battery thermal management system disclosed in the present disclosure, and a difference between this embodiment and Embodiment 1 lies in: A pulse charging and discharging frequency applied by a pulse charging and discharging apparatus to a battery is 1000 Hz.

Embodiment 3

This embodiment is used to describe heating efficiency of the battery thermal management system disclosed in the present disclosure, and a difference between this embodiment and Embodiment 1 lies in: A pulse current is 350 A.

Embodiment 4

This embodiment is used to describe heating efficiency of the battery thermal management system disclosed in the present disclosure, and a difference between this embodiment and Embodiment 1 lies in: A ratio of a relative magnetic permeability $\mu_r$ to a resistivity $\sigma$ is about 500.

Embodiment 5

This embodiment is used to describe heating efficiency of the battery thermal management system disclosed in the present disclosure, and a difference between this embodiment and Embodiment 1 lies in: A pulse charging and discharging frequency applied by a pulse charging and discharging apparatus to a battery is 7500 Hz. A pulse current is 1500 A. A ratio of a relative magnetic permeability $\mu_r$ to a resistivity $\sigma$ is about 500.

Comparative embodiment 1

This comparative embodiment is used to describe heating efficiency of the battery thermal management system disclosed in the present disclosure, and a difference between this embodiment and Embodiment 1 lies in: A material of a conductive housing is an aluminum alloy material. A ratio of a relative magnetic permeability $\mu_r$ to a resistivity $\sigma$ is 24.

Comparative embodiment 2

This comparative embodiment is used to describe heating efficiency of the battery thermal management system disclosed in the present disclosure, and a difference between this embodiment and Embodiment 1 lies in: A pulse charging and discharging frequency applied by a pulse charging and discharging apparatus to a battery is 7500 Hz. A pulse current is 1500 A. A material of a conductive housing is an aluminum alloy material. A ratio of a relative magnetic permeability $\mu_r$ to a resistivity $\sigma$ is 24.

Beneficial effects of the present disclosure are further described below through tests.

Test method: A temperature sampling point is arranged inside a to-be-tested battery, at a center of an electrode core of the battery. When it is ensured that start temperatures are the same and test environments are the same, after heating is performed in a same time period (300s), temperatures at the temperature sampling points in different embodiments/comparative embodiments are recorded. The foregoing process is repeated 10 times, and an average value is taken.

Heating efficiency of the battery is tested, and analysis results are shown in Table 1.

Table 1

|  | Value of a temperature increase |
|---|---|
| Embodiment 1 | 23.6 °C |
| Embodiment 2 | 28.1 °C |
| Embodiment 3 | 17.5 °C |
| Embodiment 4 | 12.5 °C |
| Embodiment 5 | 22.7 °C |
| Comparative embodiment 1 | 12.1 °C |
| Comparative embodiment 2 | 16.3 °C |

It can be learned from the test results in Embodiment 1 and Comparative embodiment 1 that, the ratio of the relative magnetic permeability of the conductive housing to the resistivity of the conductive housing is excessively low, the heating efficiency is reduced, and heating cannot be effectively implemented. A proper material for the conductive housing is selected, so that heating by the conductive housing on the battery is implemented. It can be learned from the test results in Embodiment 1 to Embodiment 3 that, the pulse charging and discharging frequency and the pulse current are changed, so that heating effects of the battery are different within the same heating time period. In other words, the heating power of the conductive housing 1 can be freely adjusted and flexibly controlled by controlling the pulse charging and discharging frequency and a magnitude of the pulse current during self-heating of the battery. According to Embodiment 1, Embodiment 4, and Comparative Example 1, when a value of the ratio of the relative magnetic permeability of the conductive housing to the resistivity of the conductive housing is 500, namely, a lower limit of a preferable range, the conductive housing still has a certain heating effect. However, because the used pulse frequency and pulse current are relatively low, a heating power effect of an induced eddy current of the conductive housing 1 is relatively poor, and contribution to heating of the battery is less than 10%. However, when the pulse charging and discharging frequency and the pulse current increase, it can be learned from Embodiment 5 and Comparative embodiment 2 that, when the ratio of the relative magnetic permeability of the conductive housing 1 to the resistivity of the conductive housing 1 is 500, the heating effect of the induced eddy current of the conductive housing 1 is improved. Even if the pulse charging and discharging frequency and the pulse current are increased, a heating effect of a commonly used conductive housing made of an aluminum alloy material is not effectively improved either.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A battery thermal management system, comprising a battery and a pulse charging and discharging apparatus, the battery comprising an electrode core and a conductive housing, the conductive housing being arranged on an outer periphery of the electrode core, and the pulse charging and discharging apparatus being electrically connected to the battery, wherein the pulse charging and discharging apparatus is configured to perform pulse charging and discharging on the battery to generate a changing magnetic field, the conductive housing is located in the changing magnetic field, and the conductive housing is configured to generate an induced current and heat the electrode core.

2. The battery thermal management system according to claim 1, wherein a pulse charging and discharging frequency applied by the pulse charging and discharging apparatus to the battery is greater than 10 Hz.

3. The battery thermal management system according to claim 1 or 2, wherein a pulse current I applied by the pulse charging and discharging apparatus to the battery is equal to kA, wherein A is a battery capacity, and a unit of A is Ah; and k is a coefficient, $0.3 \leq k \leq 20$, and a unit of I is A.

4. The battery thermal management system according to any one of claims 1 to 3, wherein a ratio of a relative magnetic permeability $\mu_r$ of the conductive housing to a resistivity $\sigma$ of the conductive housing is $500 \leq \mu_r/\sigma \leq 5 \times 10^6$, wherein a unit of $\sigma$ is $10^{-6}\Omega \cdot m$.

5. The battery thermal management system according to claim 4, wherein a material of the conductive housing is selected from an iron-based soft magnetic alloy, and the iron-based soft magnetic alloy comprises one or more of silicon steel, soft magnetic stainless steel, permalloy, low-carbon mild steel, amorphous soft magnetic alloy, and nanocrystalline soft magnetic alloy.

6. The battery thermal management system according to any one of claims 1 to 5, wherein a thickness of the conductive housing is T, wherein $0 < T \leq \delta$,

$$\delta = K_0 \sqrt{\sigma/(f \bullet \mu_r)} \, ,$$

$\delta$ is a skin effect penetration depth, and a unit of $\delta$ is mm;
$K_0$ is a skin effect penetration depth coefficient;
a unit of $\sigma$ is $\Omega \bullet m$;

f is the pulse charging and discharging frequency, and a unit of f is Hz; and

$\mu_r$ is the relative magnetic permeability of the conductive housing.

7. The battery thermal management system according to claim 6, wherein the conductive housing comprises a cover plate and a housing, the electrode core is accommodated in the housing, the cover plate is configured to seal the housing, and a thickness of the housing is T.

8. The battery thermal management system according to any one of claims 1 to 7, wherein the battery comprises a positive terminal and a negative terminal, and the positive terminal and the negative terminal are separately arranged at two ends of the conductive housing and are electrically connected to the electrode core.

9. A battery pack, comprising the battery thermal management system according to any one of claims 1 to 8.

10. A vehicle, comprising the battery thermal management system according to any one of claims 1 to 8.

FIG. 1

FIG. 2

## INTERNATIONAL SEARCH REPORT

| International application No. |
| --- |
| **PCT/CN2023/103968** |

### A. CLASSIFICATION OF SUBJECT MATTER

H01M10/615(2014.01)i;  H01M10/657(2014.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; ENTXT; VEN; ENTXTC; CNKI: 电池, 壳体, 磁性材料, 加热, 磁场, 脉冲, battery, shell, magnetic material, heat, magnetic field, pulse

### C. DOCUMENTS CONSIDERED TO BE RELEVANT

| Category* | Citation of document, with indication, where appropriate, of the relevant passages | Relevant to claim No. |
| --- | --- | --- |
| Y | CN 215451553 U (BYD CO., LTD.) 07 January 2022 (2022-01-07) description, paragraphs 50-88, and figures 1-11 | 1-10 |
| Y | CN 204596904 U (XI'AN ZHONGKE NEW ENERGY TECHNOLOGY CO., LTD.) 26 August 2015 (2015-08-26) description, paragraphs 24-30, and figures 1-3 | 1-10 |
| Y | JP 2010160932 A (MITSUBISHI MOTORS CORP.) 22 July 2010 (2010-07-22) description, paragraphs 14-32 | 1-10 |
| A | CN 114173542 A (OPPO GUANGDONG MOBILE TELECOMMUNICATIONS CORP., LTD.) 11 March 2022 (2022-03-11) entire document | 1-10 |
| A | CN 113381078 A (GOERTEK TECHNOLOGY CO., LTD.) 10 September 2021 (2021-09-10) entire document | 1-10 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 September 2023** | **27 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/103968** |

| Patent document cited in search report | | | Publication date (day/month/year) | Patent family member(s) | | | Publication date (day/month/year) |
|---|---|---|---|---|---|---|---|
| CN | 215451553 | U | 07 January 2022 | None | | | |
| CN | 204596904 | U | 26 August 2015 | None | | | |
| JP | 2010160932 | A | 22 July 2010 | None | | | |
| CN | 114173542 | A | 11 March 2022 | WO | 2022052732 | A1 | 17 March 2022 |
| | | | | US | 2023187714 | A1 | 15 June 2023 |
| CN | 113381078 | A | 10 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202211189986